# EUROPEAN PATENT SPECIFICATION

(11) **EP 0 448 170 B1**
(45) Date of publication and mention of the grant of the patent: **25.01.1995**
(21) Application number: 91200582.4
(22) Date of filing: 18.03.1991
(51) Int. Cl.: H01J 61/48, C09K 11/78, C09K 11/66

(54) **Low-pressure mercury vapour discharge lamp for suntanning purposes**
Niederdruckquecksilberdampfentladungslampe für Bräunungszwecke
Lampe à décharge dans la vapeur de mercure à basse pression pour des buts de bronzage

(30) Priority: 21.03.1990 NL 9000657
(43) Date of publication of application: 25.09.1991
(73) Proprietor: Philips Electronics N.V., 5621 BA Eindhoven (NL)
(72) Inventor: Baaten, Johannes Petrus Maria, NL-5656 AA Eindhoven (NL); Vermeulen, Paulus Albertus Maria, NL-5656 AA Eindhoven (NL)
(74) Representative: Evers, Johannes Hubertus Maria

(56) References cited:
- EP-A- 0 168 795
- EP-A- 0 228 737
- GB-A- 2 027 266
- GB-A- 2 059 147
- US-A- 4 336 479
- US-A- 4 363 997

## Description

The invention relates to a low-pressure mercury vapour discharge lamp for suntanning purposes comprising a closed tubular discharge vessel having an at least substantially circular cross-section, which discharge vessel contains mercury and a rare gas and is provided at the inside with a first luminescent layer which comprises a first luminescent material which emits mainly UVA and with a second luminescent layer which comprises a second luminescent material which emits mainly UVA, the first and second luminescent materials also showing UVB emission with mutually differing relative quantities of UVB radiation energy.

Such a lamp is known from the European Patent Application 0 228 737.

In the known lamp, a first luminescent layer is present over the entire circumference of the discharge vessel, which layer comprises lead-activated barium disilicate (BSP) or cerium-magnesium aluminate (CAM) as the luminescent material. A second luminescent layer is provided on the first luminescent layer at the discharge side and over the entire circumference of the discharge vessel, which second layer comprises europium-activated strontium metaborate (SBE) as the luminescent material.

The SBE has a relatively lower UVB emission (UVB energy calculated as a percentage of the quantity of UVA radiation energy emitted) than the BSP.

It is known that both UVA radiation (315-400 nm) and UVB radiation (280-315 nm) play an important part in the pigmentation process in the human skin. The main interest here concerns the process which is known as indirect or delayed pigmentation and which leads to a more permanent browning of the skin. UVB radiation is more effective for this process than is UVA radiation. A large dose of UVB radiation, however, is undesirable since it can lead to erythema (sunburn). Seen in this light, it is interesting to have available the possibility of adapting the UVB-radiation content to the wishes of the users.

In the known low-pressure mercury vapour discharge lamp mentioned above the UVB-radiation content is fixed. It is true that one could use two lamps of mutually differing UVB contents, but this means that extra provisions are necessary for switching the two lamps on and off separately. In solariums in which several lamps are present, moreover, this leads to a drop in the radiation level (W/m²) since part of the lamps would then be switched off.

The invention has for its object to provide an improved low-pressure mercury vapour discharge lamp for suntanning purposes of which the dose of UVB radiation to be received by the user can be varied.

According to the invention, a low-pressure mercury vapour discharge lamp of the kind described in the opening paragraph is characterized in that at least one of the two luminescent layers extends only over a portion of the circular circumference of the discharge vessel.

Thus it is achieved in a simple and inexpensive manner that the user receives, in addition to the desired dose of UVA radiation, a variable dose of UVB radiation through rotation of the lamp about its longitudinal axis.

A favourable embodiment of a low-pressure mercury discharge lamp according to the invention is characterized in that the first luminescent layer extends through 180° or substantially 180° on the wall of the discharge vessel and the second luminescent layer extends through 360° on the first luminescent layer and on the wall of the discharge vessel.

In this embodiment, the first luminescent layer preferably comprises strontium tetraborate activated by bivalent europium as a first luminescent material, while the second luminescent layer preferably comprises barium disilicate activated by bivalent lead as a second luminescent material.

The two luminescent materials SrB₄O₇:Eu²⁺(SBE) and BaSi₂O₅:Pb²⁺(BSP) are known per se from the said European Patent Application 0 228 737. However, in the known lamp the BSP is present at the discharge vessel side and the SBE at the discharge side, whereas in the present case this is the other way about in the area where the two layers are both present, so that it is possible by rotation of the lamp to realise not only a sufficiently high dose of UVB radiation, but also a sufficient variation in the dosed quantity of UVB radiation in the direction of the user. This is because the BSP has a relatively stronger UVB emission than the SBE, while the SBE is found to absorb part of the UVB emission of the BSP where the BSP is present on the SBE.

Another favourable embodiment of a low-pressure mercury vapour discharge lamp according to the invention is characterized in that the two luminescent layers each extend through 180° of the circular circumference of the discharge vessel, adjoining one another on the wall of the discharge vessel.

A further favourable embodiment of a low-pressure mercury vapour discharge lamp according to the invention is characterized in that the first luminescent layer extends through 360° on the wall of the discharge vessel and the second luminescent layer extends through 180° or substantially 180° on the first luminescent layer.

Embodiments of the lamp according to the invention will be explained with reference to a drawing.

In the drawing:
Fig. 1a shows a low-pressure mercury vapour discharge lamp in longitudinal section;
Fig. 1b shows the lamp of Fig. 1a in cross-section;
Figs. 2 and 3 show alternative embodiments of lamps in cross-section.

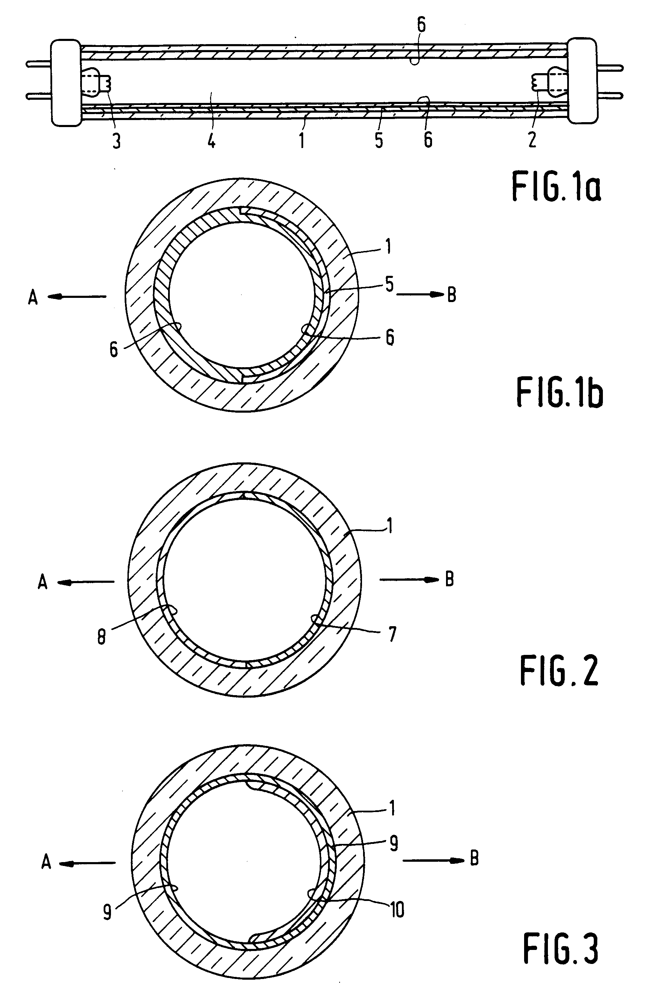

The low-pressure mercury vapour discharge lamp of Fig. 1a has a closed tubular glass discharge vessel 1 with a (Fig. 1b) circular cross-section. The discharge vessel contains mercury and a rare gas, for example argon, by way of starting gas. Inside the discharge vessel 1 are arranged electrodes 2 and 3 between which the discharge path 4 extends. The discharge vessel 1 is provided on its inside with a first luminescent layer 5 which extends through 180° (Fig. 1b) of the circular circumference of the discharge vessel 1 on the wall of this vessel. The discharge vessel 1 is further provided with a second luminescent layer 6 which extends through 360° (Fig. 1b) on the first luminescent layer 5 and on the wall of the discharge vessel 1. The luminescent layers 5 and 6 are provided in usual manner by means of a suspension.

The first luminescent layer 5 comprises a first luminescent material which generates mainly UVA emission and in addition some UVB emission upon excitation by mainly 254 nm radiation from the mercury discharge. The second luminescent layer 6 comprises a second luminescent material which also generates mainly UVA emission and in addition some UVB emission upon excitation by mainly 254 nm radiation from the mercury discharge. The relative UVB emission of the first luminescent material, i.e. the quantity of emitted UVB energy as a percentage of the quantity of UVA radiation emitted by this material, differs from that of the second luminescent material. As a result the quantity of UVB radiation energy emitted in the direction A (Fig. 1b) during lamp operation differs from the quantity emitted in the direction B. When the lamp is rotated about its longitudinal axis, therefore, a user positioned, for example, in the direction A is subjected to a varying dose of UVB radiation.

In a practical embodiment, a 100 W lamp was realised (lamp length 176 cm; bulb diameter 38 mm). The first luminescent layer 5 comprised strontium tetraborate activated by bivalent europium (SBE) as a first luminescent material. The powder weight was 3 g and the coating weight was 4,327 mg/cm². The quantity of UVA radiation emitted was 8,9 W, while the quantity of UVB radiation emitted was 0,12% of the quantity of UVA radiation emitted. The second luminescent layer comprised barium disilicate activated by bivalent lead (BSP) as a second luminescent material. The powder weight was 6 g and the coating weight was 3,055 mg/cm². The quantity of UVA radiation emitted was 16,2 W, while the quantity of UVB radiation emitted was 0,59% of the quantity of UVA radiation emitted. The UVB emission in the direction A of Fig. 1b, therefore, is greater than that in the direction B, the more so since it was found that part of the UVB radiation emitted by the luminescent layer 6 is absorbed by the luminescent layer 5 in the area where the layer 6 covers the layer 5.

In the lamp of Fig. 2, the first luminescent layer 7 and the second luminescent layer 8 each extend through 180° of the circular circumference of the discharge vessel adjoining one another on the wall of this vessel. The UVB emission content of the first luminescent material in the first luminescent layer 7 is different from that of the second luminescent material in the second luminescent layer 8. As a result, the quantities of UVB radiation emitted in the direction A and in the direction B are different.

In the lamp of Fig. 3, the first luminescent layer 9 extends through 360° on the wall of the discharge vessel 1. The second luminescent layer 10 extends through 180° on the first luminescent layer 9. The quantity of UVB radiation emitted in the direction B is greater than in the direction A. Luminescent substances used for the lamps of Figs. 2 and 3 may again be, for example, SBE and BSP.

## Claims

1. A low-pressure mercury vapour discharge lamp for suntanning purposes comprising a closed tubular discharge vessel (1) having an at least substantially circular cross-section, which discharge vessel (1) contains mercury and a rare gas and is provided at the inside with a first luminescent layer (5, 7, 9) which comprises a first luminescent material which emits mainly UVA and with a second luminescent layer (6, 8, 10) which comprises a second luminescent material which emits mainly UVA, the first and second luminescent materials also showing UVB emission with mutually differing relative quantities of UVB radiation energy, characterized in that at least one of the two luminescent layers (5, 7, 9 ; 6, 8, 10) extends only over a portion of the circular circumference of the discharge vessel (1).

2. A low-pressure mercury vapour discharge lamp as claimed in Claim 1, characterized in that the first luminescent layer (5, 7, 9) extends through 180° or substantially 180° on the wall of the discharge vessel (1) and the second luminescent layer (6, 8, 10) extends through 360° on the first luminescent layer (5, 7, 9) and on the wall of the discharge vessel (1).

3. A low-pressure mercury vapour discharge lamp as claimed in Claim 1, characterized in that the two luminescent layers (5, 7, 9 ; 6, 8, 10) each extend through 180° of the circular circumference of the discharge vessel (1), adjoining one another on the wall of the discharge vessel (1).

4. A low-pressure mercury vapour discharge lamp as claimed in Claim 1, characterized in that the first luminescent layer (5, 7, 9) extends through 360° on the wall of the discharge vessel (1) and the second luminescent layer (6 ; 8, 10) extends through 180° or substantially 180° on the first luminescent layer (5, 7, 9).

5. A low-pressure mercury vapour discharge lamp as claimed in Claim 1, 2, 3 or 4, characterized in that the first luminescent layer (5, 7, 9) comprises strontium tetraborate activated by bivalent europium as a first luminescent material, while the second luminescent layer (6 ; 8, 10) comprises barium disilicate activated by bivalent lead as a second luminescent material.

## Patentansprüche

1. Niederdruckquecksilberdampfentladungslampe für Bräunungszwecke mit einem geschlossenen rohrförmigen Entladungsgefäß (1) mit einem wenigstens hauptsächlich kreisförmigen Querschnitt, das Quecksilber und ein Edelgas enthält und an der Innenseite mit einer ersten Leuchtstoffschicht (5, 7, 9), die einen ersten Leuchtstoff, der hauptsächlich UV-A-Strahlung emittiert, und mit einer zweiten Leuchtstoffschicht (6, 8, 10) versehen ist, die einen zweiten Leuchtstoff enthält, der hauptsächlich UV-A-Strahlung emittiert, wobei die ersten und zweiten Leuchtstoffe ebenfalls UV-B-Emission mit gegenseitig abweichenden relativen UV-B-Strahlungsenergiemengen aufweisen, dadurch gekennzeichnet, daß wenigstens eine der zwei Leuchtstoffschichten (5, 7, 9; 6, 8, 10) sich nur über einen Anteil des kreisförmigen Umfangs des Entladungsgefäßes (1) erstreckt.

2. Niederdruckquecksilberdampfentladungslampe nach Anspruch 1, dadurch gekennzeichnet, daß die erste Leuchtstoffschicht (5, 7, 9) sich über 180° oder im wesentlichen 180° auf der Wand des Entladungsgefäßes (1) und die zweite Leuchtstoffschicht (6, 8, 10) sich über 360° auf der ersten Leuchtstoffschicht (5, 7, 9) und auf der Wand des Entladungsgefäßes (1) erstrecken.

3. Niederdruckquecksilberdampfentladungslampe nach Anspruch 1, dadurch gekennzeichnet, daß die zwei Leuchtstoffschichten (5, 7, 9; 6, 8, 10) sich über 180° des kreisförmigen Umfangs des Entladungsgefäßes (1) erstrecken, die auf der Wand des Entladungsgefäßes (1) aneinander grenzen.

4. Niederdruckquecksilberdampfentladungslampe nach Anspruch 1, dadurch gekennzeichnet, daß die erste Leuchtstoffschicht (5, 7, 9) sich über 360° auf der Wand des Entladungsgefäßes (1) und die zweite Leuchtstoffschicht (6, 8, 10) sich über 180° oder im wesentlichen 180° auf der ersten Leuchtstoffschicht (5, 7, 9) erstrecken.

5. Niederdruckquecksilberdampfentladungslampe nach Anspruch 1, 2, 3 oder 4, dadurch gekennzeichnet, daß die erste Leuchtstoffschicht (5, 7, 9) mit zweiwertigem Europium aktiviertes Strontiumtetraborat als Leuchtstoff enthält, während die zweite Leuchtstoffschicht (6, 8, 10) mit zweiwertigem Blei aktiviertes Bariumdisilikat als zweiten Leuchtstoff enthält.

## Revendications

1. Lampe à décharge dans la vapeur de mercure à basse pression pour des buts de bronzage comportant un récipient à décharge tubulaire fermé (1) présentant une coupe transversale au moins sensiblement circulaire, ledit récipient à décharge (1) contient du mercure et un gaz précieux et à l'intérieur il est revêtu d'une première couche luminescente (5, 7, 9) comportant un premier matériau luminescent qui émet principalement du rayonnement UVA et d'une seconde couche luminescente (6, 8, 10) comportant un second matériel luminescent qui émet principalement du rayonnement UVA, les premier et second matériaux luminescents présentant également une émission de rayonnement UVB ayant des quantités d'énergie de rayonnement UVB relatives mutuellement différentes, caractérisée en ce qu'au moins l'une des deux couches luminescentes (5, 7, 9; 6, 8, 10) ne s'étend que sur une partie de la circonférence circulaire du récipient à décharge (1).

2. Lampe à décharge dans la vapeur de mercure à basse pression selon la revendication 1, caractérisée en ce que la première couche luminescente (5, 7, 9) s'étend sous un angle de 180° ou sensiblement de 180° sur la paroi du récipient à décharge (1) et en ce que la seconde couche luminescente (6, 8, 10) s'étend sous un angle de 360°C sur la première couche luminescente (5, 7, 9) et sur la paroi du récipient à décharge (1).

3. Lampe à décharge dans la vapeur de mercure à basse pression selon la revendication 1, caractérisée en ce que les deux couches luminescentes (5, 7, 9; 6, 8, 10) s'étendent chacune sous un angle de 180° sur la circonférence circulaire du récipient à décharge (1), pour se rencontrer sur la paroi du récipient à décharge (1).

4. Lampe à décharge dans la vapeur de mercure à basse pression selon la revendication 1, caractérisée en ce que la première couche luminescente (5, 7, 9) s'étend sous un angle de 360°C sur la première couche luminescente et sur la paroi du récipient à décharge (1) et en ce que la deuxième couche luminescente (6, 8, 10) s'étend sous un angle de 180° ou sensiblement de 180° sur la première couche luminescente (5, 7, 9).

5. Lampe à décharge dans la vapeur de mercure à basse pression selon la revendication 1, 2, 3 ou 4, caractérisée en ce que la première couche luminescente (5, 7, 9) comporte comme premier matériau luminescent du tétraborate de strontium activé à l'aide d'europium bivalent, alors que la seconde couche luminescente (6, 8, 10) comporte comme deuxième matériau luminescent du disilicate de baryum activé à l'aide de plomb bivalent.
